# EUROPÄISCHE PATENTSCHRIFT

(11) **EP 3 283 353 B1**
(45) Veröffentlichungstag und Bekanntmachung des Hinweises auf die Patenterteilung: **26.02.2020**
(21) Anmeldenummer: 16716864.0
(22) Anmeldetag: 15.04.2016
(51) Int. Cl.: B62D 25/08

(54) **WINDLAUFABDECKUNGSANORDNUNG FÜR EIN KRAFTFAHRZEUG**
WINDSHIELD COVER ARRANGEMENT FOR A MOTOR VEHICLE
ENSEMBLE FORMANT CAPOT DE TABLIER POUR UN VÉHICULE AUTOMOBILE

(30) Priorität: 17.04.2015 DE 102015207067
(43) Veröffentlichungstag der Anmeldung: 21.02.2018
(73) Patentinhaber: Bayerische Motoren Werke Aktiengesellschaft, 80809 München (DE)
(72) Erfinder: KAHL, Florian, 85241 Ampermoching (DE); HUBER, Andreas, 94333 Geiselhoering (DE)
(86) Internationale Anmeldenummer: PCT/EP2016/058333
(87) Internationale Veröffentlichungsnummer: WO 2016/166275

(56) Entgegenhaltungen:
- EP-A1- 2 594 462
- WO-A1-2014/196745
- DE-A1-102013 017 183
- DE-A1-102014 201 675
- DE-C1- 4 313 783

## Beschreibung

Die vorliegende Erfindung bezieht sich auf eine Windlaufabdeckungsanordnung für ein Kraftfahrzeug mit einer Windlaufabdeckung, die an ein unteres Ende einer Frontscheibe angrenzt und sich in Richtung einer Breite des Kraftfahrzeugs erstreckt.

Beispielsweise ist aus der DE 102013012483 A1 ein Wasserabweiser für eine Windschutzscheibe eines Kraftfahrzeugs bekannt. An die Windschutzscheibe grenzt dabei ein Ablaufkörper, der auch Windlaufabdeckung genannt werden kann. Der Ablaufkörper ist Bestandteil des Wasserabweisers und ist mit einem Muldenabschnitt ausgebildet, wobei in der muldenartigen Vertiefung eine Durchgangsöffnung ausgebildet ist, die als Wasserablauf dient.

Auch aus der DE 202013008973 U1 ist ein Wasserabführsystem zum Ableiten von Wasser von einer Windschutzscheibe bekannt, das sich an ein unteres Ende der Windschutzscheibe anschließt. Der Wasserabweiser weist ein Rinnenelement zur Aufnahme von Wasser und zum Ableiten von Wasser auf. Hinter dem Wasserabweiser befindet sich ein Lufteinlassgitter zum Ansaugen von Luft unterhalb einer Frontklappe. Um zu verhindern, dass Wasser über den Wasserabweiser in den Luftansaugbereich gelangt, ist der Abweiser verhältnismäßig hoch ausgebildet und erfordert entsprechenden Bauraum in eine Fahrzeughochrichtung.

Die DE 10 2014 201 675 A1 zeigt ein Kraftfahrzeug mit einer Windlaufverkleidung, die eine Wand aufweist hinter der sich Öffnungen zum Durchtritt von Außenluft und ablaufendem Wasser befinden.

Ferner zeigt die DE 102013 017 183 A1 eine gattungsgemäße Windlaufabdeckungsanordnung für ein Kraftfahrzeug mit einer ersten Dichtlippe, durch die ablaufendes Wasser durchtreten kann, und einer zweiten Dichtlippe vor der ein Wasserablauf angeordnet ist.

Es ist die Aufgabe der vorliegenden Erfindung, eine Windlaufabdeckungsanordnung für ein Kraftfahrzeug mit einer Windlablaufdeckung zu schaffen, die in eine Fahrzeughochrichtung weniger Bauraum erfordert und trotzdem eine hinreichend große Menge an Wasser ableiten kann.

Diese Aufgabe wird durch eine Windlaufabdeckungsanordnung gelöst, die die Merkmale von Patentanspruch 1 aufweist. Weitere vorteilhafte Merkmale der Erfindung sind in den abhängigen Patentansprüchen aufgeführt.

Eine Windlaufabdeckungsanordnung für ein Kraftfahrzeug weist eine Windlaufabdeckung auf, die an ein unteres Ende einer Frontscheibe angrenzt und sich in Richtung einer Breite des Kraftfahrzeugs erstreckt. Die Windlaufabdeckungsanordnung hat ferner eine erste Wand zum Sammeln von von der Frontscheibe über die Windlaufabdeckung abfließendes Wasser. Ferner hat die Windlaufabdeckungsanordnung eine zweite Wand zum Sammeln von über bzw. durch die erste Wand fließendem Wasser. Es ist darüber hinaus zumindest ein Wasserablauf zum Ableiten des von der zweiten Wand gesammelten Wassers vorgesehen. Ferner ist eine Luftansaugöffnung einer Innenraumbelüftungsvorrichtung hinter der zweiten Wand angeordnet und ein Wassersammel- und Wasserablaufbereich ist vor der zweiten Wand angeordnet. Die Richtungsangaben "hinter" und "vor" beziehen sich hierbei auf eine Wasserströmungsrichtung bzw. eine Richtung einer zur Luftansaugöffnung strömenden Luft. Die Wasserströmungsrichtung bzw. die Luftströmungsrichtung ist im Wesentlichen entgegengesetzt einer Fahrzeughauptfahrtrichtung.

Durch das Hintereinanderanordnen der ersten Wand und der zweiten Wand kann bei geringerer Wandhöhe trotzdem eine vergleichsweise gute Wassersammelleistung erzielt werden. Ein erforderlicher Bauraum in Fahrzeughochrichtung ist damit verringert.

Die erste Wand bildet insbesondere eine Begrenzung eines ersten Wassersammelbereichs. Die zweite Wand bildet insbesondere eine Begrenzung eines zweiten Wassersammelbereichs (und auch Wasserablaufbereichs).

Bevorzugt ist die erste Wand oder die zweite Wand integral mit der Windlaufabdeckung ausgebildet. Es können auch die erste Wand und die zweite Wand integral mit der Windlaufabdeckung ausgebildet sein.

Hierdurch ist eine Anzahl an Bauteilen und eine Anzahl an Dichtstellen verringert.

Insbesondere können/kann die erste Wand und/oder die zweite Wand integral mit der Windlaufabdeckung mittels Kunststoffspritzguss ausgebildet sein.

Ein Kunststoffspritzgussteil kann kostengünstig hergestellt werden, ist hinreichend leicht sowie gegenüber äußeren Witterungseinflüssen beständig.

Die zweite Wand kann grundsätzlich höher als die erste Wand ausgebildet sein. Dies hat insbesondere den Vorteil, wenn die Windlaufabdeckung schräg, d.h. nach vorne hin abfallend ausgebildet ist. Mit der ersten Wand kann dabei eine erste Menge an Wasser gesammelt werden, wobei sichergestellt ist, dass mittels der zweiten Wand, die höher ist, in jedem Fall die erste Wand überströmendes bzw. durchströmendes Wasser gesammelt werden kann. Eine Wassersammelkapazität der zweiten Wand ist damit größer als eine Wassersammelkapazität der ersten Wand.

Gemäß einer bevorzugten Weiterbildung ist ein weiterer Wasserablauf zum Ableiten des von der ersten Wand gesammelten Wassers vorgesehen. Alternativ oder zusätzlich kann auch in einem unteren Abschnitt der ersten Wand an geeigneter Stelle ein Durchgangsloch angeordnet sein, das durchströmendes Wasser auf kurzem Wege zu dem Wasserablauf zum Ableiten des von der zweiten Wand gesammelten Wassers leiten kann, ohne eine Wassersammelkapazität der zweiten Wand wesentlich zu beeinträchtigen.

Gemäß einer bevorzugten Weiterbildung sind bei der Windlaufabdeckungsanordnung die erste Wand und die zweite Wand zwischen der Windlaufabdeckung und einer geschlossenen Frontklappe des Kraftfahrzeugs angeordnet. Mit anderen Worten sind die erste Wand und die zweite Wand unterhalb der geschlossenen Frontklappe angeordnet.

Ferner befinden sich die erste Wand und die zweite Wand bevorzugt in einem Ansaugbereich von Luft zu der Luftansaugöffnung.

Hierdurch kann durch die Wassersammelkapazität der ersten Wand und der zweiten Wand zuverlässig verhindert werden, dass übermäßig Wasser und Feuchtigkeit zu der Innenraumbelüftungsvorrichtung zusammen mit der Luft geleitet bzw. angesaugt wird.

Hierbei kann zwischen einer Unterseite der geschlossenen Frontklappe und einem oberen Ende der ersten Wand ein Spalt ausgebildet sein, der Bestandteil des Ansaugbereichs von Luft ist. Mit anderen Worten kann durch diesen Spalt Luft für eine Innenraumbelüftungsvorrichtung angesaugt werden.

Ferner kann zusätzlich oder alternativ zwischen einer Unterseite der geschlossenen Frontklappe und einem oberen Ende der zweiten Wand ein Spalt ausgebildet sein, der Bestandteil des Ansaugbereichs von Luft ist.

Damit kann über die erste Wand und über die zweite Wand Luft angesaugt werden, wobei die zweite Wand verhindert, dass gegebenenfalls mitgerissenes Wasser oder überströmendes Wasser in die Innenraumbelüftungsvorrichtung gelangt, da dieses Wasser zuverlässig durch die zweite Wand aufgefangen werden kann.

Statt des Spalts zwischen der ersten Wand und der Frontklappe bzw. der zweiten Wand und der Frontklappe können auch Löcher in einem oberen Abschnitt der jeweiligen Wand ausgebildet sein, durch die die Luft angesaugt werden kann.

Es ist auch möglich, dass sowohl ein Spalt als auch zusätzlich Löcher in einem oberen Abschnitt der jeweiligen Wand angeordnet sind.

Ferner kann vorteilhaft die erste Wand eine Unterseite der geschlossenen Frontklappe dichtend kontaktieren. In diesem Fall müssen in einem oberen Abschnitt der ersten Wand Löcher zum Ansaugen von Luft ausgebildet sein.

Auch die zweite Wand könnte derart ausgebildet sein, dass sie eine Unterseite der Frontklappe insbesondere dichtend kontaktiert. Auch in diesem Fall müssten dann zwangsweise zum Ansaugen von Luft Löcher in einem oberen Bereich der zweiten Wand ausgebildet sein.

Durch die Ausgestaltung mit zwei hintereinander angeordneten Wänden im Bereich des Ansaugbereichs von Luft zu der Luftansaugöffnung kann durch die Hintereinanderschaltung von zwei Wänden Wasser besser abgeleitet werden und es kann besser verhindert werden, dass Wasser in die Luftansaugöffnung eintritt bzw. mitgerissen wird.

Ferner kann hierdurch ein Ansaugbereich von Luft geschaffen werden, der hinsichtlich eines geringen Druckverlusts möglichst strömungsgünstig unterhalb einer Unterseite der Frontklappe verläuft.

Durch die zwei hintereinander angeordneten Wassersammelwände können diese niedriger ausgebildet werden und damit steht mehr Bauraum für den Ansaugbereich von Luft zur Verfügung, wodurch ein nachteiliger Druckverlust so gering wie möglich gehalten werden kann.

Gemäß einer bevorzugten Weiterbildung der Windlaufabdeckungsanordnung erstreckt sich die erste Wand im Wesentlichen in eine Fahrzeugquerrichtung. Ebenso kann sich die zweite Wand im Wesentlichen in eine Fahrzeugquerrichtung erstrecken.

Somit ist die erste Wand bzw. die zweite Wand im Wesentlichen quer zu einer Richtung von von der Frontscheibe abfließendes Wasser ausgebildet und kann das abfließende Wasser am Weiterströmen verhindern und besonders günstig abgeleitet werden.

Die erste Wand und/oder die zweite Wand können/kann sich im Wesentlichen über eine gesamte Breite des Windlaufes und / oder der Frontscheibe des Kraftfahrzeugs erstrecken.

Die Wände können jedoch auch lediglich im Bereich eines Luftansaugbereichs angeordnet sein. Es können auch mehrere Luftansaugbereiche angeordnet sein.

Bevorzugt ist in dem Bereich zwischen der ersten Wand und der zweiten Wand, insbesondere in der Windlaufabdeckung, keine Luftansaugöffnung angeordnet.

Es folgt eine Kurzbeschreibung der Figuren.
- Fig. 1: ist eine Draufsicht auf eine Windlaufabdeckungsanordnung eines Kraftfahrzeugs.
- Fig. 2: ist eine Schnittansicht entlang der Linie A - A der Windlaufabdeckungsanordnung gemäß dem Ausführungsbeispiel der vorliegenden Erfindung.

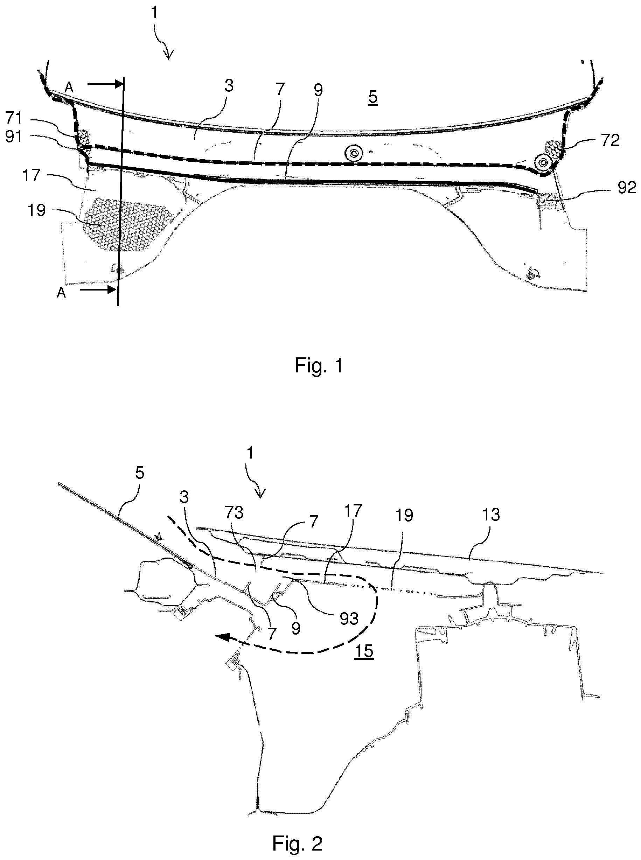

Im Folgenden ist ein Ausführungsbeispiel der vorliegenden Erfindung unter Bezugnahme auf Figuren 1 und 2 beschrieben.

Wie in Figur 1 gezeigt ist, hat eine Windlaufabdeckungsanordnung 1 eines Kraftfahrzeugs gemäß dem Ausführungsbeispiel der vorliegenden Erfindung eine Windlaufabdeckung 3, die sich an einem unteren Ende (d.h. einem in Hauptfahrtrichtung des Kraftfahrzeugs vorderen Ende) einer Frontscheibe 5 anschließt. Die Windlaufabdeckung 3 und die Frontscheibe 5 sind dabei über eine Dichtung miteinander verbunden und bilden üblicherweise eine ineinander übergehende Fläche. Ein Großteil der Windlaufabdeckung 3 ist dabei unterhalb einer geschlossenen Frontklappe 13, die in Figur 1 nicht gezeigt ist, angeordnet. Die Windlaufabdeckung 3 erstreckt sich im Wesentlichen über eine gesamte Breite der Frontscheibe 5. Die Windlaufabdeckung 3 weist eine erste Wand 7 auf, die sich quer zu der Windlaufabdeckung 3 in eine Breitenrichtung des Kraftfahrzeugs über die gesamte Breite der Windlaufabdeckung 3 erstreckt und in Figur 1 mit einer gestrichelten Linie dargestellt ist. Die erste Wand 7 ist als eine Wand zum Auffangen und Sammeln von Wasser ausgebildet, das von der Frontscheibe 5 nach unten - also in die Hauptfahrtrichtung des Kraftfahrzeugs nach vorne - abfließt. In Wasserablaufrichtung hinter, d.h. in die Hauptfahrtrichtung des Kraftfahrzeugs vor, der ersten Wand 7 ist eine zweite Wand 9 angeordnet, die sich ebenfalls quer zu der Windlaufabdeckung 3 über die gesamte Breite der Windlaufabdeckung 3 in Breitenrichtung des Kraftfahrzeugs im Wesentlichen über eine gesamte Breite der Frontscheibe 5 erstreckt. Die Windlaufabdeckung 3 mit der ersten Wand 7 und der zweiten Wand 9 ist vorteilhaft einstückig als Kunststoffspritzgussteil ausgebildet.

In Wasserablaufrichtung hinter der Windlaufabdeckung 3 bzw. in die Hauptfahrtrichtung des Kraftfahrzeugs vor der Windlaufabdeckung 3 ist ein Luftkanal 15, der lediglich in Figur 2 dargestellt ist, zum Ansaugen von Luft für eine Innenraumbelüftungsvorrichtung, eine Klimaanlage oder dergleichen vorgesehen, wobei der Luftkanal 15 mit einem Flächenelement 17 abgedeckt ist, in dem eine Luftansaugöffnung 19 mit einer Vielzahl von Löchern 19, die in gitterartiger Form angeordnet sind, ausgebildet ist. Das Flächenelement 17 ist getrennt von der Windlaufabdeckung 3 ausgebildet und grenzt in die Hauptfahrtrichtung des Kraftfahrzeugs vor der zweiten Wand 9 an die Windlaufabdeckung 3 an. Die Windlaufabdeckung 3 könnte aber auch einstückig mit dem Flächenelement 17 ausgebildet sein. Durch die Luftansaugöffnung 19 kann Luft für die Innenraumbelüftungsvorrichtung in den Luftkanal 15 unter dem Flächenelement 17 gelangen. Die gitterartige Anordnung der Löcher 19 verhindert als Schutzgitter, dass gröbere Feststoffe in den Luftkanal 15 gelangen.

An seitlichen Enden der Windlaufabdeckung 3 sind in Wasserablaufrichtung vor der ersten Wand 7 Wasserablauflöcher 21 und 22 vorgesehen. Ferner sind an seitlichen Enden der Windlaufabdeckung 3 in Wasserablaufrichtung Wasserablauflöcher 23 und 24 vorgesehen. Die Wasserablauflöcher 21, 22, 23 und 24 können auch an anderen geeigneten Orten vor der jeweiligen Wand vorgesehen sein. Die Wasserablauflöcher 21, 22, 23 und 24 sind bevorzugt an Tiefpunkten der Windlaufabdeckung 3 vorgesehen.

Figur 2 ist eine Schnittansicht entlang der Linie A - A durch die Windlaufabdeckungsanordnung 1 gemäß dem Ausführungsbeispiel der Erfindung in einem Luftansaugbereich für Luft für die Innenraumbelüftungseinrichtung. Wie in Figur 2 erkennbar ist, grenzt die Windlaufabdeckung 3 ein das untere Ende der Frontscheibe 5 an und ist mit dieser im Wesentlichen flächenbündig. Wie bereits unter Bezugnahme auf Figur 1 erläutert ist, ist aus der Figur 2 zu erkennen, dass sich die erste Wand 7 und die zweite Wand 9 im Wesentlichen quer zu der Windlaufabdeckung 3 erstrecken und insbesondere im Wesentlichen senkrecht zu der Windlaufabdeckung 3 angeordnet sind. Die erste Wand 7 und die zweite Wand 9 sind dabei integraler Bestandteil der Windlaufabdeckung 3, die als ein einstückiges Bauteil ausgebildet ist. Die erste Wand 7 erstreckt sich von einer Hauptfläche der Windlaufabdeckung 3 zu einer Unterseite der geschlossenen Frontklappe 5. In einem oberen Abschnitt der ersten Wand 7 sind Durchgangslöcher 73 vorgesehen, durch die Luft angesaugt werden kann. Es sind dabei viele Durchgangslöcher 73 nebeneinander angeordnet, die ein Schutzgitter gegen den Eintrag von Laub oder anderen Fremdstoffen in den Bereich in Wasserablaufrichtung hinter der ersten Wand 7 bilden. An einem oberen Ende der ersten Wand 7 über den Durchgangslöchern 73 kann beispielsweise eine Weichkomponente angebracht sein, die bei geschlossener Frontklappe 5 an der Unterseite der Frontklappe 5 dichtend anliegt. Zwischen einem oberen Ende der zweiten Wand 9 und der Unterseite der Fronklappe 13 ist ein Spalt 93 ausgebildet, durch den die Luft angesaugt werden kann. Ein Fuß der zweiten Wand 9 liegt tiefer als ein Fuß der ersten Wand 7. Ferner ist die zweite Wand 9 höher als die erste Wand 7 - zumindest bezogen auf den Abschnitt der ersten Wand 7, der keine Durchgangslöcher aufweist.

Im Folgenden ist eine Funktion der Windlaufabdeckungsanordnung 1 gemäß dem Ausführungsbeispiel beschrieben.

Von der Frontscheibe 5 abfließendes Wasser, insbesondere Regenwasser oder Waschwasser, wird zunächst an der ersten Wand 7 des ersten Wassersammelbereichs gesammelt und über die Wasserabläufe 71 und 72 abgeleitet. Bei einer großen Wassermenge, die von der Frontscheibe 5 abfließt, besteht jedoch auch die Möglichkeit, dass Wasser durch die Durchgangslöcher 73 und damit durch die erste Wand 7 gelangt. Das durch die Durchgangslöcher 73 strömende Wasser wird jedoch an der zweiten Wand 9 gesammelt. Durch die schräge Anordnung der Hauptfläche der Windlaufabdeckung 3 ist ein Fuß der zweiten Wand 9 tiefer als ein Fuß der ersten Wand 7 angeordnet, so dass ein zweiter Wassersammelbereich vor der zweiten Wand 9 tiefer als der erste Wassersammelbereich vor der ersten Wand 7 angeordnet ist. Das durch die zweite Wand 9 gesammeltes Wasser kann durch die weiteren Wasserabläufe 91 und 92 abgeleitet werden. Die erste Wand 7 und die zweite Wand 9 haben den Zweck, das von der Frontscheibe 5 abfließende Wasser zu sammeln und zu verhindern, dass Wasser in die Luftansaugöffnung 19 gelangt. Die erste Wand 7 und die zweite Wand 9 können auch als Schwallwände bezeichnet werden.

Ein Luftansaugbereich zu der Luftansaugöffnung 19 verläuft zwischen einem in Hauptfahrtrichtung hinteren Ende der Frontklappe 13 und der Frontscheibe 5 bzw. der Windlaufabdeckung 3. Ferner verläuft der Luftansaugbereich durch die Durchgangslöcher 73 der ersten Wand 7 sowie durch den Spalt 93 zwischen der zweiten Wand 9 und der Unterseite der Frontlappe 13. Weiterhin verläuft der Luftansaugbereich zwischen dem Flächenelement 17 und der Unterseite der Frontklappe 13. Durch die Luftansaugöffnung 19 des Flächenelements 17 gelangt die Luft von dem Luftansaugbereich in den Luftkanal 15. Der Verlauf der Luft ist dabei durch einen gestrichelten Pfeil in Figur 2 veranschaulicht.

Die Vorteile der Erfindung kommen insbesondere dann zum Tragen, wenn gleichzeitig eine große Menge Wasser von der Frontscheibe 5 abläuft und Luft durch den Luftansaugbereich angesaugt wird. Durch die hintereinander geschalteten zwei Wassersammelbereiche vor der ersten Wand 7 und der zweiten Wand 9 kann dabei sukzessive eine durch den Luftstrom gegebenenfalls mitgerissene Wassermenge reduziert werden und abgeleitet werden. Das Flächenbauteil 17 hinter der zweiten Wand 9 kann dabei zusätzlich dazu beitragen, dass gegebenenfalls im Luftstrom vorhandenes Wasser an dem Flächenbauteil abgeschieden wird und nicht in den Luftkanal 15 eingetragen wird.

Insgesamt ermöglicht die beschriebene Anordnung gemäß dem Ausführungsbeispiel der vorliegenden Erfindung eine effiziente Abscheidung von Wasser bei einem möglichst geringen Druckverlust für die angesaugte Luft bei einer verhältnismäßig geringen Bauhöhe der ersten Wand bzw. der zweiten Wand. Mit anderen Worten kann durch die Anordnung der beiden Wände hintereinander eine hohe Wasserabscheideleistung auch bei geringem Bauraum in Höhenrichtung erzielt werden. Umgekehrt kann durch den geringeren Bauraum der Wände gegebenenfalls mehr Bauraum für den Luftansaugbereich zur Verfügung gestellt werden. Dies ermöglicht wiederum einen geringeren Druckverlust sowie geringere Strömungsgeschwindigkeiten der angesaugten Luft, wodurch vorteilhaft ein Mitreißen von Wasser durch die Luft unwahrscheinlicher wird.

Das Ausführungsbeispiel kann auch noch modifiziert werden.

Beispielsweise ist es möglich, dass sich auch die zweite Wand bis zu der Unterseite der geschlossenen Frontklappe erstreckt, jedoch ebenso wie die erste Wand Durchgangslöcher zum Durchlass der angesaugten Luft aufweist. Umgekehrt ist es auch möglich, dass ein oberes Ende der ersten Wand sich nicht bis zu der Unterseite der Frontklappe erstreckt und damit ein Spalt zwischen der ersten Wand und der Unterseite der Frontklappe ausgebildet ist, um Luft durchzuführen. Wie in Figur 2 zu sehen ist, ist die zweite Wand höher als die erste Wand ausgebildet. Die erste Wand und die zweite Wand können auch gleich hoch ausgebildet sein. Die zweite Wand kann auch niedriger als die erste Wand ausgebildet sein.

## Patentansprüche

1. Windlaufabdeckungsanordnung (1) für ein Kraftfahrzeug mit einer Windlaufabdeckung (3), die an ein unteres Ende einer Frontscheibe (5) angrenzt und sich in Richtung einer Breite des Kraftfahrzeugs erstreckt, mit einer ersten Wand (7) zum Sammeln von der Frontscheibe (5) über die Windlaufabdeckung (3) abfließendem Wasser und einer zweiten Wand (9) zum Sammeln von über und/oder durch die erste Wand (7) fließendem Wasser, sowie zumindest einem Wasserablauf (91) zum Ableiten des von der zweiten Wand (9) gesammelten Wassers, wobei ein Wassersammel- und Wasserablaufbereich vor der zweiten Wand (4) angeordnet ist **dadurch gekennzeichnet, dass**
eine Luftansaugöffnung (19) einer Innenraumbelüftungsvorrichtung hinter der zweiten Wand (4) angeordnet ist.

2. Windlaufabdeckungsanordnung nach Patentanspruch 1, wobei die erste Wand (7) und/oder die zweite Wand (9) integral mit der Windlaufabdeckung (3) ausgebildet ist/sind.

3. Windlaufabdeckungsanordnung nach Patentanspruch 1 oder 2, wobei die zweite Wand (9) höher als die erste Wand (7) ausgebildet ist.

4. Windlaufabdeckungsanordnung nach einem der Patentansprüche 1 bis 3, mit einem weiteren Wasserablauf (72) zum Ableiten des von der ersten Wand (7) gesammelten Wassers.

5. Windlaufabdeckungsanordnung nach einem der Patentansprüche 1 bis 4,
wobei die erste Wand (7) und die zweite Wand (9) zwischen der Windlaufabdeckung (3) und einer geschlossenen Frontklappe (13) des Kraftfahrzeugs angeordnet sind und sich in einem Ansaugbereich von Luft zu der Luftansaugöffnung (19) befinden.

6. Windlaufabdeckungsanordnung nach Patentanspruch 5,
wobei zwischen einer Unterseite der geschlossenen Frontklappe und einem oberen Ende der ersten Wand ein (erster) Spalt ausgebildet ist, der Bestandteil des Ansaugbereichs von Luft ist, und/oder wobei zwischen einer Unterseite der geschlossenen Frontklappe (13) und einem oberen Ende der zweiten Wand (9) ein (zweiter) Spalt (93) ausgebildet ist, der Bestandteil des Ansaugbereichs von Luft ist.

7. Windlaufabdeckungsanordnung nach Patentanspruch 5, wobei die erste Wand (7) eine Unterseite der geschlossenen Frontklappe (13) insbesondere dichtend kontaktiert,
und/oder
wobei die zweite Wand eine Unterseite der Frontklappe insbesondere dichtend kontaktiert.

8. Windlaufabdeckungsanordnung nach einem der Patentansprüche 5 bis 7,
wobei die erste Wand (7) an einem oberen Abschnitt Löcher (73) aufweist, die Bestandteil des Ansaugbereichs von Luft sind,
und/oder
wobei die zweite Wand an einem oberen Abschnitt Löcher aufweist, die Bestandteil des Ansaugbereichs von Luft sind.

9. Windlaufabdeckungsanordnung nach einem der Patentansprüche 1 bis 8,
wobei sich die erste Wand (7) und/oder die zweite Wand (9) im Wesentlichen in Fahrzeugquerrichtung erstrecken.

10. Windlaufabdeckungsanordnung nach einem der Patentansprüche 1 bis 8,
wobei sich die erste Wand (7) und/oder die zweite Wand (9) im Wesentlichen über eine gesamte Breite des Windlaufes bzw. der Frontscheibe des Kraftfahrzeugs erstrecken.

## Claims

1. A cowl cover arrangement (1) for a motor vehicle with a cowl cover (3) which adjoins a lower end of a front pane (5) and extends in the direction of a width of the motor vehicle, with a first wall (7) for collecting water flowing from the front pane (5) over the cowl cover (3) and a second wall (9) for collecting water flowing over and/or through the first wall (7), as well as at least one water outlet (91) for draining the water collected by the second wall (9), the water collection and water drainage region being arranged in front of the second wall (4)
**characterised in that**
an air suction opening (19) of an interior ventilation device is arranged behind the second wall (4).

2. A cowl cover arrangement according to Claim 1, the first wall (7) and/or the second wall (9) being formed integrally with the cowl cover (3).

3. A cowl cover arrangement according to Claim 1 or 2, the second wall (9) being formed in a higher position than the first wall (7).

4. A cowl cover arrangement according to one of Claims 1 to 3, having a further water outlet (72) for draining the water collected by the first wall (7).

5. A cowl cover arrangement according to one of Claims 1 to 4, the first wall (7) and the second wall (9) being arranged between the cowl cover (3) and a closed front flap (13) of the motor vehicle and located in a region where air is suctioned to the air suction opening (19).

6. A cowl cover arrangement according to Claim 5,
a (first) gap being formed between an underside of the closed front flap and an upper end of the first wall, which gap constitutes a part of the air suction region, and/or
a (second) gap (93) being formed between an underside of the closed front flap (13) and an upper end of the second wall (9), which gap constitutes a part of the air suction region.

7. A cowl cover arrangement according to Claim 5,
the first wall (7) making particularly sealing contact with the underside of the closed front flap (13),
and/or
the second wall making particularly sealing contact with the underside of the front flap.

8. A cowl cover arrangement according to one of Claims 5 to 7, the first wall (7) having holes (73) in an upper section which constitute part of the air suction region, and/or the second wall having holes in an upper section which constitute part of the air suction region.

9. A cowl cover arrangement according to one of Claims 1 to 8, the first wall (7) and/or the second wall (9) extending substantially in the vehicle transverse direction.

10. A cowl cover arrangement according to one of Claims 1 to 8, the first wall (7) and/or the second wall (9) extending substantially over an entire width of the cowl or the front pane of the motor vehicle.

## Revendications

1. Dispositif de couverture de tablier (1) destiné à un véhicule comprenant une couverture de tablier (3) qui est contigüe à l'extrémité inférieure d'un pare-brise (5) et s'étend dans la direction de la largeur du véhicule, comportant une première paroi (7) permettant de recueillir l'eau s'écoulant à partir du pare-brise (5) sur la couverture de tablier (3) et une seconde paroi (9) permettant de recueillir l'eau s'écoulant sur et/ou au travers de la première paroi (7) ainsi qu'au moins un écoulement d'eau (91) permettant d'évacuer l'eau recueillie par la seconde paroi (9), une zone de collecte et d'évacuation d'eau étant située à l'avant de la seconde paroi (4),
**caractérisé en ce qu'**
une ouverture d'aspiration d'air (19) d'un dispositif d'aération de l'habitacle est installée à l'arrière de la seconde paroi (4).

2. Dispositif de couverture de tablier conforme à la revendication 1,
dans lequel la première paroi (7) et/ou la seconde paroi (9) est(sont) réalisée(s) intégralement avec la couverture de tablier (3).

3. Dispositif de couverture de tablier conforme à la revendication 1 ou 2,
dans lequel la seconde paroi (9) est plus haute que la première paroi (7).

4. Dispositif de couverture de tablier conforme à l'une des revendications 1 à 3,
comprenant un autre écoulement d'eau (72) permettant d'évacuer l'eau recueillie par la première paroi (7).

5. Dispositif de couverture de tablier conforme à l'une des revendications 1 à 4,
dans lequel la première paroi (7) et la seconde paroi (9) sont installées entre la couverture de tablier (3) et le capot avant fermé (13) du véhicule, et sont situées dans une zone d'aspiration d'air vers l'ouverture d'aspiration d'air (19).

6. Dispositif de couverture de tablier conforme à la revendication 5,
dans lequel entre le côté inférieur du capot avant fermé et l'extrémité supérieure de la première paroi est formée une première fente qui fait partie de la zone d'aspiration d'air, et/ou entre le côté inférieur du capot avant fermé (13) et l'extrémité supérieure de la seconde paroi (9) est formée une seconde fente (93) qui fait partie de la zone d'aspiration d'air.

7. Dispositif de couverture de tablier conforme à la revendication 5,
dans lequel la première paroi (7) vient en contact en particulier hermétiquement avec le côté inférieur du capot avant fermé (13), et/ou la seconde paroi vient en contact de préférence hermétiquement avec le côté inférieur du capot avant.

8. Dispositif de couverture de tablier conforme à l'une des revendications 5 à 7,
dans lequel la première paroi (7) comporte sur un segment supérieur des perçages (73) qui font partie de la zone d'aspiration d'air, et/ou la seconde paroi comporte sur un segment supérieur des perçages qui font partie de la zone d'aspiration d'air.

9. Dispositif de couverture de tablier conforme à l'une des revendications 1 à 8,
dans lequel la première paroi (7) et/ou la seconde paroi (9) s'étend(s'étendent) essentiellement dans la direction transversale du véhicule.

10. Dispositif de couverture de tablier conforme à l'une des revendications 1 à 8,
dans lequel la première paroi (7) et/ou la seconde paroi (9) s'étend(s'étendent) essentiellement sur la totalité de la largeur du tablier ou du pare-brise du véhicule.
